# FASCICULE DE BREVET EUROPEEN

(11) **EP 1 463 656 B1**
(45) Date de publication et mention de la délivrance du brevet: **31.08.2005**
(21) Numéro de dépôt: 02801179.9
(22) Date de dépôt: 24.12.2002
(51) Int. Cl.: B60T 7/04, B60T 11/16, B60T 11/236

(54) **CIRCUIT ELECTRO-HYDRAULIQUE DE FREINAGE D UN VEHICULE.**
ELEKTROHYDRAULISCHER BREMSKREIS FÜR FAHRZEUG
VEHICLE ELECTRO-HYDRAULIC BRAKING CIRCUIT

(30) Priorité: 31.12.2001 FR 0117121
(43) Date de publication de la demande: 06.10.2004
(73) Titulaire: ROBERT BOSCH GMBH, 70442 Stuttgart (DE)
(72) Inventeur: DELAGE, Jean-Pierre, F-94160 SAINT MANDE (FR); BOURLON, Philippe, F-77230 DAMMARTIN EN GOELE (FR); PENIGAULT, Jean-Louis, F-75016 PARIS (FR); BRAHMI, Omar, F-95270 SAINT MARTIN DU TERTRE (FR)
(74) Mandataire: Hurwic, Aleksander Wiktor
(86) Numéro de dépôt international: PCT/FR2002/004553
(87) Numéro de publication internationale: WO 2003/059711

(56) Documents cités:
- DE-A- 19 822 411
- DE-C- 19 950 862
- US-B1- 6 192 685
- US-B1- 6 226 993

## Description

L'invention concerne un circuit électro-hydraulique de freinage d'un véhicule comportant un maître cylindre. L'invention a pour but d'améliorer et d'optimiser l'action de freinage du véhicule par un conducteur, notamment dans le cas d'un dysfonctionnement d'au moins un élément du circuit électro-hydraulique au cours d'un freinage brusque du véhicule. L'invention est plus particulièrement destinée au domaine de l'automobile mais pourrait être utilisée dans d'autres domaines.. Le document US6192685 B1 divulge le préambule de la revendication 1.

Un circuit électro-hydraulique comporte un capteur de déplacement d'une pédale de frein placé à proximité ou sur la pédale de frein. Au moment d'un freinage du véhicule, le capteur détecte un déplacement de la pédale de frein et envoie un ordre de commande à une pompe hydraulique. La pompe hydraulique est chargée d'aspirer et de monter en pression un liquide hydraulique provenant d'un réservoir de liquide hydraulique. La pression générée par la pompe permet ensuite de transmettre un volume de liquide avec une pression nécessaire pour freiner le véhicule à travers un dispositif de freinage.

Une sensation d'enfoncement de la pédale de frein par le conducteur est alors reproduite au moyen d'un simulateur d'actionnement de frein. Ce simulateur est branché sur un maître cylindre.

Ce maître cylindre est relié, à une extrémité, à la pédale de frein, et à une autre extrémité, au dispositif de freinage. Pour que le maître cylindre n'interfère pas avec le fonctionnement de la pompe, une électrovanne est placée entre le maître cylindre et le dispositif de freinage. Lors de la détection du déplacement de la pédale de frein par le capteur, cette électrovanne peut se fermer, déconnectant de manière réversible le maître cylindre du dispositif de freinage.

De la pédale de frein au dispositif de freinage, le maître cylindre est muni d'une chambre primaire à l'intérieur de laquelle coulisse un piston primaire et d'une chambre secondaire à l'intérieur de laquelle coulisse un piston secondaire. Les chambres primaire et secondaire du maître cylindre sont alimentées en liquide hydraulique par le réservoir de liquide hydraulique. Ce maître cylindre n'est pas utile au freinage proprement dit du véhicule. Toutefois, il permet en cas de dysfonctionnement d'au moins un élément du circuit électro-hydraulique d'assurer le freinage du véhicule. Un élément du circuit électro-hydraulique peut être, par exemple, le capteur de déplacement de la pédale de frein ou la pompe hydraulique.

Le simulateur d'actionnement de frein débouche par un conduit dans la chambre primaire du maître cylindre. Ce simulateur comporte une chambre. Par cette chambre, le simulateur reproduit une sensation de freinage à un conducteur en reçevant un volume de liquide provenant du réservoir de liquide hydraulique suite au déplacement de la pédale de frein.

Dans une situation où un des éléments du circuit électro-hydraulique ne fonctionne plus, il est encore possible de freiner le véhicule au moyen du maître cylindre. Dans cette situation, l'électrovanne présente entre le maître cylindre et le dispositif de freinage reste ouverte et le simulateur est déconnecté du maître cylindre de manière réversible,

Pour déconnecter le simulateur du maître cylindre afin d'empêcher le volume de liquide de remplir la chambre du simulateur, la communication entre la chambre du simulateur et la chambre primaire est coupée à l'aide d'un joint torique. Ce joint torique est situé sur une circonférence du piston secondaire, entre le piston primaire et le conduit du simulateur. Le joint torique est disposé dans une gorge circulaire. La gorge circulaire est creusée sur la circonférence du piston secondaire. Ce joint est disposé, au repos, en regard d'un renfoncement circulaire creusé dans l'alésage du maître cylindre.

En cas de freinage du véhicule et lorsque le circuit est en dysfonctionnement, le piston secondaire du maître cylindre se déplace en direction du dispositif de freinage car l'électrovanne disposée entre le maître cylindre et le dispositif de freinage est ouverte. En se déplaçant, le piston secondaire entraîne avec lui le déplacement du joint torique le long de l'alésage du maître cylindre. En se déplaçant, le joint torique n'est plus en regard du renfoncement. Le joint torique est alors comprimé contre l'alésage du maître cylindre et la gorge du piston secondaire. En se comprimant, le joint torique ferme la communication entre la chambre primaire et la chambre du simulateur. Le liquide ne passe plus entre le piston secondaire du maître cylindre et l'alésage du maître cylindre pour remplir la chambre du simulateur. Le volume de liquide peut ainsi être comprimé à l'intérieur de la chambre primaire pour ensuite générer une pression vers le dispositif de freinage. Le piston secondaire comprime également un deuxième volume de liquide hydraulique destiné à agir également au niveau du dispositif de freinage.

Lors d'un freinage brusque et lorsque le circuit électro-hydraulique est en dysfonctionnement, le piston secondaire se déplace brutalement et rapidement à l'intérieur du maître cylindre en direction du dispositif de freinage. Un petit volume de liquide hydraulique a le temps de s'insinuer entre le piston secondaire et l'alésage du maître cylindre avant que le joint ne coupe la communication entre la chambre primaire et la chambre du simulateur. Cette entrée de liquide dans la chambre du simulateur est plus rapide que lors d'un freinage normal. C'est pourquoi, cette entrée très rapide de liquide génère une onde de pression se déplaçant depuis la chambre du simulateur vers la chambre primaire.

Au moment du défreinage (ou relâchement de la pédale de frein), la chambre du simulateur et la chambre primaire sont encore coupées de toutes communications. Le piston primaire a tendance à se déplacer plus vite que le piston secondaire dans la direction de la pédale de frein. La pression régnant à l'intérieur de la chambre primaire devient d'autant plus faible que le piston primaire s'éloigne rapidement de la chambre du simulateur. Puis, le piston secondaire continue à se déplacer en direction de la pédale de frein jusqu'à ce que le joint se situe face au renfoncement de l'alésage du maître cylindre. A ce moment là, la différence de pression entre la chambre primaire et la chambre du simulateur est à son maximum. Un surplus de pression dans la chambre du simulateur par rapport à la chambre primaire et une onde de pression ont tendance à pousser le piston secondaire vers la pédale de frein. Le joint a alors tendance à être aspiré vers la chambre primaire de plus faible pression. Le joint s'écarte selon un axe perpendiculaire par rapport à un axe du piston secondaire. Le joint peut alors finir par s'extruder de son logement.

Au freinage suivant, si le joint a été extrudé de son logement, le joint ne peut plus jouer son rôle d'isolateur entre la chambre primaire et la chambre du simulateur. Le liquide présent dans la chambre primaire est alors évacué dans la chambre du simulateur jusqu'à ce que cette dernière chambre soit entièrement remplie. Une fois que la chambre du simulateur est entièrement remplie, le piston primaire peut exercer une pression sur ce volume. Le temps nécessaire pour exercer une pression sur le volume s'allonge et le temps de réaction de freinage du véhicule diminue également. En diminuant le temps de réaction de freinage du véhicule, le freinage est moins efficace. Pour rendre plus efficace le freinage du véhicule, il est donc dans l'intérêt du conducteur que le joint ne s'extrude pas de sa gorge lors d'un freinage, surtout lors d'un freinage brusque.

Pour empêcher l'extrusion du joint de la gorge du piston secondaire lors d'un défreinage (ou relâchement de la pédale de frein) résultant d'un freinage brusque, il pourrait être possible de diminuer la profondeur du renfoncement de l'alésage du maître cylindre. De cette manière, le joint n'aurait pas la place de s'extruder de la gorge au moment du défreinage (ou relâchement de la pédale de frein). Cependant cette solution présente l'inconvénient de ne faire entrer qu'une plus faible quantité de fluide depuis la chambre primaire jusque dans la chambre du simulateur lorsque le circuit électro-hydraulique fonctionne. Il faudrait prendre en compte ce nouveau paramètre pour donner la sensation au conducteur qu'il freine le véhicule par l'intermédiaire de la pédale de frein. Cette solution est coûteuse et fastidieuse à mettre en place du fait de la nécessité de la mise au point de ce nouveau paramètre.

Pour éviter que le joint ne s'extrude de la gorge lors d'un défreinage (ou relâchement de la pédale de frein) résultant d'un freinage brusque, il pourrait également être possible de mettre en place un dispositif chargé de freiner le déplacement du piston primaire en direction de la pédale de frein. En freinant le déplacement du piston primaire en direction de la pédale de frein lors du défreinage (ou relâchement de la pédale de frein), la différence de pression entre la chambre primaire et la chambre du simulateur serait moins grande. Le surplus de pression dans la chambre du simulateur qui s'évacuerait dans la chambre primaire au moment où le joint se situerait en regard du renfoncement de l'alésage du maître cylindre serait plus faible. Ce surplus de pression plus faible, évacué à ce moment là, serait alors insuffisant pour entraîner l'extrusion du joint de la gorge. Cependant la mise en place d'un tel dispositif serait également coûteuse et fastidieuse à réaliser.

Pour empêcher une éventuelle extrusion du joint de sa gorge suite à un freinage brusque en cas de dysfonctionnement d'un élément du circuit, l'invention prévoit d'évacuer, lors du défreinage (ou relâchement de la pédale de frein), un surplus de pression de pression présent dans la chambre du simulateur. Pour évacuer ce surplus de pression présent à l'intérieur de la chambre du simulateur, l'invention prévoit de réaliser au moins un conduit de délestage de pression à l'intérieur du piston secondaire. Ce conduit de délestage permet de relier la chambre du simulateur à la chambre primaire lorsque le joint coupe la communication entre la chambre du simulateur et la chambre primaire. L'avantage de cette solution est qu'elle est simple à réaliser et peu coûteuse dans sa réalisation.

De préférence, un moyen anti-retour est disposé à l'intérieur de ce conduit de délestage de manière à ce que le volume de liquide sous pression issu de la chambre primaire ne puisse pas remplir la chambre du simulateur au cours du freinage et que ce volume soit directement compressible.

L'invention permet ainsi d'améliorer et d'optimiser le freinage du véhicule en assurant que le joint ne s'extrude pas de son logement au cours du défreinage (ou relâchement de la pédale de frein) et en assurant que le freinage soit le plus immédiat possible en cas de dysfonctionnement d'un élément du circuit électro-hydraulique.

L'invention a donc pour objet un circuit électro-hydraulique de freinage d'un véhicule comportant un maître cylindre, ce maître cylindre comportant une chambre primaire et une chambre d'un simulateur d'actionnement de frein, la chambre primaire étant fermée à une extrémité par un piston primaire et isolée de la chambre du simulateur par un joint torique placé dans une gorge périphérique sur une circonférence d'un piston secondaire, caractérisé en ce que le piston secondaire est creusé d'au moins un conduit de délestage de pression pour relier la chambre du simulateur à la chambre primaire.

L'invention sera mieux comprise à la lecture de la description qui suit, et à l'examen des figures qui l'accompagnent. Celles-ci ne sont représentées qu'à titre indicatif et nullement limitatif de l'invention. Les figures montrent :
- Figure 1 : une représentation schématique d'un circuit électro-hydraulique de freinage d'un véhicule, selon l'invention ;
- Figures 2a à 2d : des représentations schématiques d'un glissement d'un piston secondaire à l'intérieur d'un maître cylindre,
- Figure 3 : une représentation schématique d'un piston secondaire, selon l'invention, et
- Figure 4 : une vue en coupe longitudinale d'un maître cylindre.

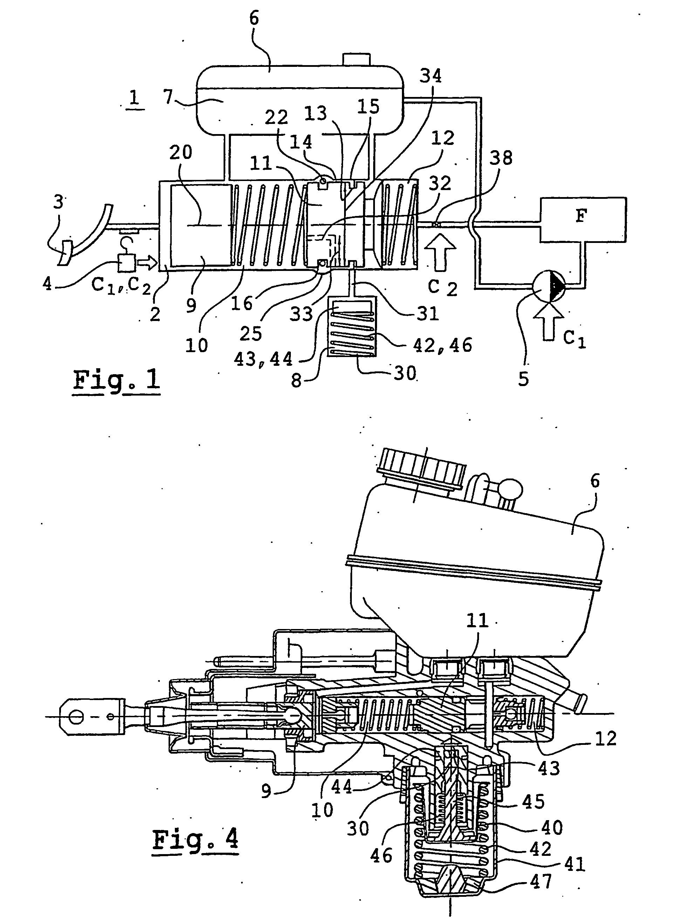

La figure 1 montre un circuit électro-hydraulique de freinage 1 d'un véhicule comportant un maître cylindre 2, selon l'invention. Le circuit électro-hydraulique de freinage 1 comporte également une pédale de frein 3, un capteur de déplacement 4 de la pédale de frein 3 commandant le fonctionnement d'une pompe hydraulique 5 par un ordre de commande C1, un réservoir 6 de liquide hydraulique 7, un dispositif de freinage F et un simulateur d'actionnement de frein 8 branché sur le maître cylindre 2.

De la pédale de frein 3 au dispositif de freinage F, le maître cylindre 2 comporte un piston primaire 9 destiné à coulisser à l'intérieur d'une chambre primaire 10 et un piston secondaire 11 destiné à coulisser à l'intérieur d'une chambre secondaire 12.

A une extrémité du piston secondaire 11, celle en direction du dispositif de freinage F, est creusée un canal circulaire 13 sur une circonférence 14 du piston secondaire 11. A l'intérieur de ce canal 13 est disposée une coupelle d'étanchéité 15. Cette coupelle 15 assure l'étanchéité de la chambre primaire 10 par rapport à la chambre secondaire 12.

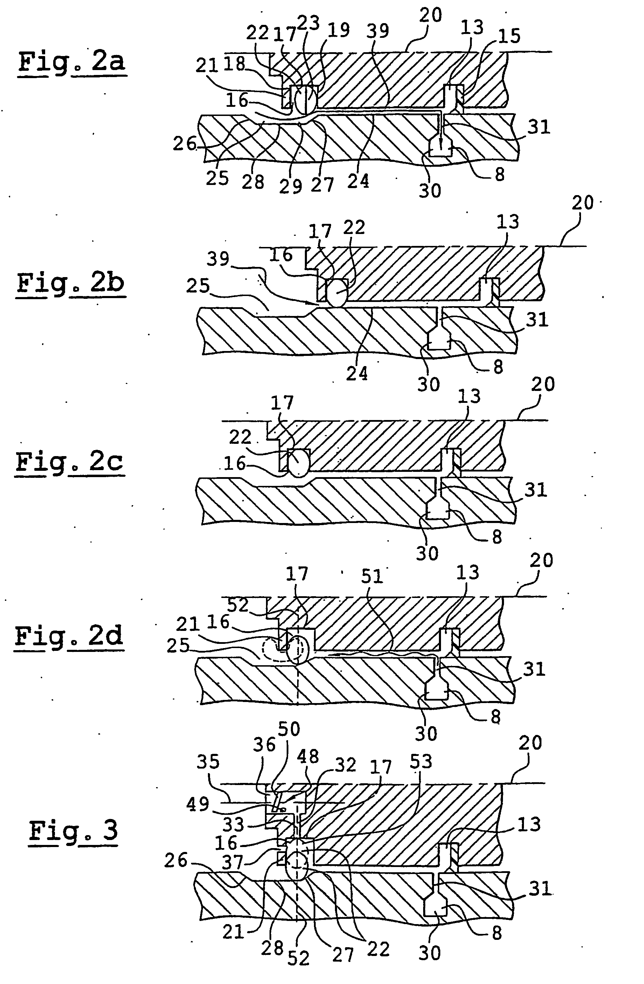

A une autre extrémité du piston secondaire 11, celle en direction de la pédale de frein 3, est creusée une gorge circulaire 16 périphérique. Cette gorge 16 est représentée figures 2a à 2d. Cette gorge 16, figure 2a, comporte un fond 17 et deux rebords 18 et 19. Le fond 17 possède un plan paralèlle à un axe 20 du piston secondaire 11. Le rebord 18 et le rebord 19 possèdent chacun un plan perpendiculaire au plan du fond 17 et un plan perpendiculaire à l'axe 20 du piston secondaire 11. Le rebord 18 est situé en direction de la chambre primaire 10 alors que le rebord 19 est situé en direction de la chambre secondaire 12. Le rebord 18 forme avec une portion du piston secondaire 11 une excroissance ou collerette 21 s'étendant radialement vers l'extérieur du maître cylindre. Cette collerette 21 possède une forme allongée dont le plan est perpendiculaire à l'axe 20 du piston secondaire 11.

Un joint torique 22 est placé à l'intérieur de cette gorge 16, figure 2a. Ce joint peut comporter une section ronde d'un diamètre 23 tel que le joint 22 déborde de la circonférence 14 du piston secondaire 11 lorsqu'il est placé à l'intérieur de la gorge 16. Le diamètre 23 possède une dimension réalisée de telle manière que le joint 22 peut être légèrement comprimé par un alésage 24 du maître cylindre 2.

L'alésage 24 du maître cylindre est creusé également d'un renfoncement 25, figure 2a, réalisé de telle manière qu'au repos, le joint 22 se situe en regard de ce renfoncement 25 et que le joint 22 ne soit pas comprimé. Ce renfoncement a une forme trapézoïdale avec un premier chanfrein 26 et un deuxième chanfrein 27 inclinés et opposés. Le chanfrein 26 est disposé en direction de la pédale de frein 3 alors que le chanfrein 27 est disposé en direction de la chambre secondaire 12. Ces deux chanfreins 26 et 27 sont reliés par une face de liaison 28. La face de liaison possède un plan parallèle à l'axe 20 du piston secondaire 11. Au repos, le joint 22 est disposé de telle manière qu'un espace 29, figure 2a, est présent entre le joint 22 et la face de liaison 28 du renfoncement 25.

Le simulateur 8 possède une chambre 30 reliée à la chambre primaire 10 du maître cylindre 2 par un conduit 31 placé en regard du piston secondaire 11, figure 1. Ce conduit 31 peut déboucher entre le canal 13 et la gorge 16. Ce conduit peut également déboucher à l'endroit où se situe le canal 13, figure 1.

Selon l'invention, le piston secondaire 11 comporte des moyens permettant un délestage de pression de la chambre du simulateur 30 à la chambre primaire 10. Ces moyens permettant un délestage de pression de la chambre du simulateur à la chambre primaire comportent au moins un conduit de délestage 32 de pression. Ce conduit de délestage 32 est creusé dans le piston secondaire 11. Ce conduit de délestage 32 est représenté figure 1 par des traits en pointillés. Ce conduit de délestage 32 est creusé dans le piston secondaire 11 de telle manière qu'il débouche dans la chambre primaire 10 et en regard de l'alésage 24 du maître cylindre 2. Ce conduit de délestage 32 relie la chambre primaire 10 à la chambre 30 du simulateur 8. Notamment, le conduit de délestage 32 relie la chambre primaire 10 à la chambre 30 lorsque le joint 22 est comprimé entre la gorge 16 et l'alésage 24 du maître cylindre.

Cependant, le conduit 32 peut également contoumer le joint 22, comme représenté figure 3. Notamment figure 3, ce conduit de délestage 32 est creusé à partir du fond 17 de la gorge 16. Ce conduit de délestage 32 est creusé sur au moins une partie 33, figure 3, d'un diamètre 34, figure 1, du piston secondaire 11 à partir du fond 17 de la gorge 16. Par exemple, la partie 33 peut être creusée d'une longueur correspondant à la distance séparant le fond 17 de la gorge 16 de l'axe 20 du piston secondaire 11. Mais la partie 33 pourrait également être creusée d'une distance comprise entre le fond 17 de la gorge 16 et l'axe 20 du piston secondaire 11. Par exemple figure 3, le conduit de délestage 32 peut être creusé à partir du fond 17 de la gorge 16 jusqu'à un autre axe 35 parallèle à l'axe 20. Puis ce conduit de délestage 32 peut déboucher à partir de cette même partie 33 dans la chambre primaire 10 par un trou axial 36 au piston secondaire 11. Notamment, ce conduit de délestage 32 peut déboucher par le trou 36 selon l'axe 20 du piston secondaire 11. Ou bien, ce conduit de délestage 32 peut déboucher par le trou 36 parallèlement à l'axe 20 du piston secondaire 11 en passant selon l'axe 35 du piston secondaire 11, comme représenté figure 3.

En variante; la collerette 21 peut également être creusée d'un autre conduit de délestage 37, figure 3. Cet autre conduit de délestage 37 peut déboucher parallèlement dans la chambre primaire 10 par rapport à l'axe 20 du piston secondaire 11.

Dans un cas de freinage et de fonctionnement normal du circuit électro-hydraulique 1, figure 1, le capteur de déplacement 4 de la pédale de frein 3 envoie un ordre de commande C1 à la pompe 5 suite à la détection du déplacement de la pédale de frein 3. Cet ordre de commande C1 entraîne l'aspiration du liquide hydraulique provenant du réservoir 6 par la pompe 5. Ce liquide, une fois mis sous pression par la pompe 5, est ensuite transmis au dispositif de freinage F pour freiner le véhicule. Le capteur de déplacement 4 de la pédale de frein 3 envoie également au même moment un autre ordre de commande C2. Cet autre ordre de commmande C2 entraîne la fermeture d'une électrovanne 38, figure 1. Cette électrovanne 38 est située en aval du maître cylindre 2, entre le maître cylindre et le dispositif de freinage F. En fermant l'électrovanne 38, la communication entre le maître cylindre 2 et le dispositif de freinage F est alors coupée.

Un volume de liquide contenu dans la chambre primaire 10 du maître cylindre est également déplacé. Le déplacement de ce volume de liquide a pour but de reproduire une sensation de freinage par le conducteur suite à l'appui de son pied sur la pédale de frein 3. Ce volume est déplacé au moyen du piston primaire 9 en direction de la chambre 30 du simulateur d'actionnement de frein 8. Le liquide circule entre le joint 22 et l'alésage 24 du maître cylindre. Notamment, le liquide circule au travers de l'espace 29 entre le joint 22 et le renfoncement 25, figure 2a. Puis le liquide s'insinue entre le piston secondaire 11 et l'alésage 24 du maître cylindre pour ensuite se déverser dans la chambre 30 du simulateur 8 par le conduit 31. La circulation du liquide en direction de la chambre 30 du simulateur est représentée par une flèche 39 sur la figure 2a.

Le simulateur génère une sensation d'enfoncement de la pédale de frein en acceptant progressivement et avec une certaine résistance le volume de liquide dans la chambre 30. Pour cela, le simulateur est muni d'un premier récipient 40 contenu dans un deuxième récipient 41, figure 4. Le premier récipient 40 est suspendu à l'intérieur du deuxième récipient 41 par un premier ressort 42. Le premier récipient 40. comporte la chambre 30, un premier piston d'actionnement 43 et un deuxième piston d'actionnement 44. Suite à une entrée de liquide dans la chambre 30, le premier piston 43 est d'abord comprimé contre une base 45. Cette base 45 est fixée solidement au premier recipient 40. Suite au remplissage de la chambre 30 par le liquide et une fois que le premier piston 43 est en contact avec la base 45, le deuxième piston d'actionnement 44 est alors comprimé contre le premier piston 43 et la base 45. Ce deuxième piston 44 étant monté sur un second ressort 46, le deuxième piston 44 se déplace jusqu'à ce qu'il se plaque contre le premier piston 43. Puis la pression du liquide entraîne alors le déplacement du premier récipient 40 vers un fond 47 du deuxième récipient 41. Le déplacement successif de chacun des pistons 43 et 44 réalisé par le remplissage de la chambre 30 par un volume de liquide ainsi que le déplacement du premier récipient 40 vers le fond 47 du deuxième récipient 41 entraînent alors une sensation de résistance lors de l'enfoncement de la pédale de frein 3 par le conducteur.

Lorsque au moins un des éléments du circuit électro-hydraulique ne fonctionnent plus, comme par exemple la pompe hydraulique 5, le maître cylindre 2 peut assurer le freinage de secours du véhicule. Dans ce cas, suite à l'enfoncement de la pédale de frein 3 au cours du freinage, l'électrovanne 38 reste dans une position ouverte. Dans cette position, l'électrovanne 38 permet au maître cylindre d'être relié au dispositif de freinage F. Le liquide contenu dans la chambre primaire 10 du maître cylindre 2 peut alors être comprimé par l'intermédiaire de l'avancée du piston primaire 9 contre le piston secondaire 11 en direction du dispositif de freinage F pour être évacuer à travers un conduit (non représenté) menant au dispositif de freinage F, figure 1.

Pour éviter que le liquide ne pénètre dans la chambre 30 du simulateur, la communication entre la chambre primaire 10 et la chambre 30 du simulateur est momentanément coupée au moyen du joint 22. L'aboutissement de la coupure de la communication entre la chambre primaire 10 et la chambre 30 du simulateur 8 en cas de freinage et lors d'un dysfonctionnement d'un élément du circuit 1 est représentée sur les figures 2a à 2b. La compression du liquide contre le piston secondaire 11 entraîne le déplacement du piston secondaire 11. En se déplaçant, le piston secondaire 11 entraîne également le déplacement du joint torique 22, figure 2b. Le joint est ainsi situé en dehors du renfoncement 25. Puis il est comprimé entre l'alésage 24 du maître cylindre et la gorge 16. Selon l'invention, le joint étant étanche et élastique, le joint 22 coupe la communication entre la chambre primaire 10 et la chambre 30 du simulateur. Le blocage de la circulation du liquide en direction de la chambre 30 du simulateur 8 est représenté par la flèche 39, figure 2b.

Selon l'invention, un moyen anti-retour 48 peut être installé à l'intérieur du conduit de délestage 32 pour éviter que le liquide ne pénètre dans la chambre 30 du simulateur par le conduit de délestage 32 au cours du freinage, figure 3. Par exemple, un clapet anti-retour 48 peut être installé à l'intérieur du conduit de délestage 32, figure 3. Ce clapet 48 peut comporter une première tige 49 fixe et une deuxième tige 50 flexible. Ces deux tiges 49 et 50 sont diamètralement insérées à l'intérieur du conduit de délestage 32.. Elles sont insérées perpendiculairement à l'axe 20 du piston secondaire 11. La tige 50 est plus longue que la tige 49 et est située entre la tige 49 et la chambre primaire 10. Ainsi, le liquide ne peut pénétrer à l'intérieur du conduit de délestage 32 que depuis la chambre du simulateur 30 vers la chambre primaire 10.

Si on ne veut pas installer le clapet 48, on obtient le même résultat en obturant le conduit de délestage 32 par la paroi du joint torique 22, dont l'élasticité est adapté en conséquence. L'obturation du conduit de délestage 32 par la paroi du joint 22 est représentée par des traits en pointillés sur la figure 3.

Au cours du défreinage (ou relâchement de la pédale de frein) résultant du freinage normal, le piston secondaire 11 glisse le long de l'alésage 24 du maître cylindre dans la direction de la pédale de frein 3 jusqu'à ce que le joint se situe en regard du renfoncement 25.

Dans le cas d'un freinage brutal, le piston primaire 9 comprime le liquide contre le piston secondaire 11 en direction du dispositif de freinage F. Du fait de la rapidité du freinage, un petit volume de liquide a pu s'introduire dans la chambre 30 du simulateur 8 en circulant dans l'espace 29 et en s'insérant entre l'alésage 24 du maître cylindre et le piston secondaire 11 avant que le piston secondaire 11 isole la chambre primaire 10 de la chambre 30 du simulateur 8 par l'intermédiaire du joint 22, figures 2c et 2d. Ce volume de liquide est générateur d'une onde de pression 51, figure 2d. Cette onde de pression 51 peut se propager depuis la chambre 30 du simulateur 8 vers la chambre primaire 10.

Au cours du défreinage (ou relâchement de la pédale de frein) résultant du freinage brutal, le piston primaire 9 se déplace plus vite que le piston secondaire 11 en direction de la pédale de frein 3. Une dépression s'installe alors entre la chambre primaire 10 et la chambre du simulateur 30. La pression régnant à l'intérieur de la chambre primaire 10 est plus faible que la pression régnant à l'intérieur de la chambre 30. L'intérieur de la chambre 30 présente alors un surplus de pression par rapport à l'intérieur de la chambre primaire 10. Ce surplus de pression est d'autant plus important que le joint 22 freine le déplacement du piston secondaire 11 en direction de la pédale de frein 3 alors que le piston primaire 9 continue son déplacement vers la pédale de frein 3.

Ainsi, le surplus de pression régnant à l'intérieur de la chambre 30 du simulateur et l'onde de pression 51 présente à l'intérieur de la chambre 30 du simulateur ont tendance à extruder le joint 22 de la gorge 16 lorsque le joint se situe en face du renfoncement 25, figure 2d. Lorsque le joint se situe en face du renfoncement 25, le joint 22 a tendance à être aspiré vers la chambre primaire 10 de plus faible pression. La forte pression régnant à l'intérieur de la chambre 30 du simulateur ainsi que l'onde de pression 51 entraînent un écartement du joint selon un axe 52 perpendiculaire à l'axe 20 du piston secondaire 11 passant par le diamètre 23. Le joint se retrouve plaqué contre le chanfrein 27 et la collerette 21. Puis le joint a tendance à rouler autour de la collerette 21 et à se courber pour finir par se déloger de la gorge 16. La courbure du joint 22 résultant de la force de pression exercée par l'onde de pression 51 et par le surplus de pression régnant dans la chambre du simulateur 30 est représentée par des traits en pointillés sur la figure 2d.

Cependant, grâce à l'invention, le joint 22 n'est plus succeptible de s'extruder de la gorge 16. En effet, ce surplus de pression est diminué par la présence du conduit de délestage 32 à l'intérieur du piston secondaire 11, figure 3. Ce conduit de délestage 32 permet l'évacuation du surplus de pression de la chambre 30 du simulateur et de l'onde de pression 51 en reliant la chambre du simulateur 30 à la chambre primaire 10. Cette évacuation de surplus de pression peut se réaliser par le conduit de délestage 32 contournant le joint 22, figure 3. Cette évacuation de surplus de pression est d'autant plus facilitée que le piston primaire 9 a tendance, lors de son déplacement vers la pédale de frein 3, à aspirer le contenu de la chambre du simulateur 30.

Cette évacuation du surplus de pression est également d'autant plus facilitée que le joint 22 s'écarte du fond 17 de la gorge par aspiration lorsqu'il est situé face au renfoncement 25. En s'écartant du fond 17 de la gorge 16, le joint 22 libère alors un espace 53 favorisant l'évacuation de ce surplus de pression et de l'onde de pression 51.

## Revendications

1. Circuit électro-hydraulique de freinage (1) d'un véhicule comportant un maître cylindre (2), ce maître cylindre comportant une chambre primaire (10) et une chambre (30) d'un simulateur d'actionnement de frein (8), la chambre primaire (10) étant fermée à une extrémité par un piston primaire (9) et isolée de la chambre (30) du simulateur par un joint torique (22) placé dans une gorge périphérique (16) sur une circonférence (14) d'un piston secondaire (11), **caractérisé en ce que** le piston secondaire (11) comporte des moyens permettant un délestage de pression de la chambre du simulateur à la chambre primaire.

2. Circuit (1) selon la revendication 1 **caractérisé en ce que** les moyens permettant un délestage de pression comportent au moins un conduit de délestage (33) creusé dans le piston secondaire (11).

3. Circuit (1) selon l'une des revendications 1 à 2 **caractérisé en ce que** le conduit de délestage (32) contourne le joint (22).

4. Circuit (1) selon l'une des revendications 1 à 3 **caractérisé en ce que** le conduit de délestage (32) est creusé à partir de la gorge (16).

5. Circuit (1) selon les revendications 1 à 4 **caractérisé en ce que** le conduit de délestage (32) est creusé à partir d'un fond (17) de la gorge (16) dont le plan est parallèle à un axe (20) du piston secondaire (11).

6. Circuit (1) selon la revendication 5 **caractérisé en ce que** le conduit de délestage (32) creusé à partir du fond (17) de la gorge (16) traverse au moins une partie (33) d'un diamètre (34) du piston secondaire (11) et débouche à partir de cette même partie par un trou (36) axial au piston secondaire dans la chambre primaire (10).

7. Circuit (1) selon la revendication 6 **caractérisé en ce que** le conduit de délestage (32) débouche par le trou (36) perpendiculairement par rapport à la partie (33) d'un diamètre (34) du piston secondaire (11).

8. Circuit (1) selon les revendications 1 à 7 **caractérisé en ce que** le conduit de délestage (32) est creusé à partir d'une collerette (21) de la gorge (16) dont le plan est perpendiculaire à un axe (20) du piston secondaire (11).

9. Circuit (1) selon l'une des revendications 1 à 8 **caractérisé en ce que** le joint (22) est élastique et étanche.

10. Circuit (1) selon l'une des revendications 1 à 9 **caractérisé en ce que** le conduit de délestage (32) est muni d'un moyen anti-retour (48) empêchant un fluide de se déplacer de la chambre primaire (10) vers la chambre du simulateur (30).

11. Circuit (1) selon la revendication 10 **caractérisé en ce que** le moyen (48) est un clapet anti-retour (48).

## Patentansprüche

1. Elektrohydraulischer Bremskreis (1) für ein Fahrzeug, mit einem Hauptzylinder (2), wobei dieser Hauptzylinder eine Primärkammer (10) und eine Kammer (30) eines Bremsbetätigungssimulators (8) aufweist, wobei die Primärkammer (10) an einem Ende durch einen Primärkolben (9) verschlossen und durch eine torische Dichtung (22), die in eine umlaufende Nut (16) an einem Umfang (14) eines Sekundärkolbens (11) eingesetzt ist, von der Kammer (30) des Simulators isoliert ist, **dadurch gekennzeichnet, dass** der Sekundärkolben (11) Mittel aufweist, die eine Druckentlastung von der Simulatorkammer zur Primärkammer ermöglichen.

2. Kreis (1) nach Anspruch 1, **dadurch gekennzeichnet, dass** die Mittel, die eine Druckentlastung ermöglichen, mindestens eine Entlastungsleitung (33) aufweisen, die im Sekundärkolben (11) ausgehöhlt ist:

3. Kreis (1) nach einem der Ansprüche 1 bis 2, **dadurch gekennzeichnet, dass** die Entlastungsleitung (32) die Dichtung (22) umgeht.

4. Kreis (1) nach einem der Ansprüche 1 bis 3, **dadurch gekennzeichnet, dass** die Entlastungsleitung (32) von der Nut (16) ausgehend ausgehöhlt ist.

5. Kreis (1) nach den Ansprüchen 1 bis 4, **dadurch gekennzeichnet, dass** die Entlastungsleitung (32) ausgehend von einem Boden (17) der Nut (16) ausgehöhlt ist, dessen Ebene parallel zu einer Achse (20) des Sekundärkolbens (11) ist.

6. Kreis (1) nach Anspruch 5, **dadurch gekennzeichnet, dass** die Entlastungsleitung (32), die ausgehend vom Boden (17) der Nut (16) ausgehöhlt ist, mindestens einen Teil (33) eines Durchmessers (34) des Sekundärkolbens (11) durchquert und ausgehend von diesem selben Teil über eine zum Sekundärkolben axial verlaufende Bohrung (36) in die Primärkammer (10) mündet.

7. Kreis (1) nach Anspruch 6, **dadurch gekennzeichnet, dass** die Entlastungsleitung (32) senkrecht zum Teil (33) eines Durchmessers (34) des Sekundärkolbens (11) aus der Bohrung (36) ausgeht.

8. Kreis (1) nach den Ansprüchen 1 bis 7, **dadurch gekennzeichnet, dass** die Entlastungsleitung (32) ausgehend von einem Kragen (21) der Nut (16) ausgehöhlt ist, dessen Ebene senkrecht zu einer Achse (20) des Sekundärkolbens (11) ist.

9. Kreis (1) nach einem der Ansprüche 1 bis 8, **dadurch gekennzeichnet, dass** die Dichtung (22) elastisch und dicht ist.

10. Kreis (1) nach einem der Ansprüche 1 bis 9, **dadurch gekennzeichnet, dass** die Entlastungsleitung (32) mit einem Rückschlagmittel (48) versehen ist, das verhindert, dass ein Fluid sich von der Primärkammer (10) zur Simulatorkammer (30) bewegt.

11. Kreis (1) nach Anspruch 10, **dadurch gekennzeichnet, dass** das Mittel (48) ein Rückschlagventil (48) ist.

## Claims

1. An electro-hydraulic brake circuit (1) for a vehicle, said brake circuit including a master cylinder (2), said master cylinder being provided with a primary chamber (10) and with a chamber (30) of a brake actuation simulator (8), the primary chamber (10) being closed at one end by a primary piston (9) and isolated from the chamber (30) of the simulator by an O-ring gasket (22) placed in a peripheral groove (16) on a circumference (14) of a secondary piston (11), said brake circuit being **characterized in that** the secondary piston (11) is provided with means making it possible to relieve pressure from the chamber of the simulator to the primary chamber.

2. A circuit (1) according to claim 1, **characterized in that** the pressure relief means include at least one pressure relief duct (32) provided in the secondary piston (11).

3. A circuit (1) according to claim 1 or claim 2, **characterized in that** the pressure relief duct (32) bypasses the gasket (22).

4. A circuit (1) according to any one of claims 1 to 3, **characterized in that** the pressure relief duct (32) is provided starting from the groove (16).

5. A circuit (1) according to any one of claims 1 to 4, **characterized in that** the pressure relief duct (32) is provided starting from a bottom wall (17) of the groove (16), the plane of which bottom wall is parallel to an axis (20) of the secondary piston (11).

6. A circuit (1) according to claim 5, **characterized in that** the pressure relief duct (32) is provided starting from the bottom wall (17) of the groove (16), passes through at least a portion (33) of a diameter (34) of the secondary piston (11) and opens out from said portion via a hole (36) that is axial to the secondary piston into the primary chamber (10).

7. A circuit (1) according to claim 6, **characterized in that** the pressure relief duct (32) opens out via the hole (36) perpendicularly to the portion (33) of a diameter (34) of the secondary piston (11).

8. A circuit (1) according to any one of claims 1 to 7, **characterized in that** the pressure relief duct (32) is provided starting from a collar (21) of the groove (16), the plane of which collar is perpendicular to an axis (20) of the secondary piston (11).

9. A circuit (1) according to any one of claims 1 to 8, **characterized in that** the gasket (22) is elastic and leaktight.

10. A circuit (1) according to any one of claims 1 to 9, **characterized in that** the pressure relief duct (32) is provided with check means (48) preventing fluid from flowing from the primary chamber (10) to the chamber of the simulator (30).

11. A circuit (1) according to claim 10, **characterized in that** the means (48) are constituted by a check valve (48).
